# EUROPÄISCHE PATENTSCHRIFT

(11) **EP 3 218 630 B1**
(45) Veröffentlichungstag und Bekanntmachung des Hinweises auf die Patenterteilung: **02.09.2020**
(21) Anmeldenummer: 15797434.6
(22) Anmeldetag: 29.10.2015
(51) Int. Cl.: F16L 19/02, F16B 37/08, F24C 3/00, F16L 37/12

(54) **VERBINDUNGSEINRICHTUNG UND GASKOCHFELD**
CONNECTION DEVICE AND GAS STOVE TOP
DISPOSITIF DE RACCORDEMENT ET TABLE DE CUISSON À GAZ

(30) Priorität: 14.11.2014 ES 201431668
(43) Veröffentlichungstag der Anmeldung: 20.09.2017
(73) Patentinhaber: BSH Hausgeräte GmbH, 81739 München (DE)
(72) Erfinder: PALACIOS VALDUEZA, Luis Antonio, E-39610 Astillero (ES); PLACER MARURI, Emilio, E-39120 Liencres (ES); SAIZ GONZALEZ, Roberto, E-39539 Santander (ES)
(86) Internationale Anmeldenummer: PCT/IB2015/058352
(87) Internationale Veröffentlichungsnummer: WO 2016/075579

(56) Entgegenhaltungen:
- EP-A1- 1 703 193
- US-A- 3 168 333
- US-A- 3 394 950
- US-A- 5 503 437
- US-A1- 2011 101 674

## Beschreibung

Die vorliegende Erfindung betrifft ein Gaskochfeld mit einer Verbindungseinrichtung.

Ein Gaskochfeld kann einen Gasbrenner, ein Gasventil und eine den Gasbrenner mit dem Gasventil verbindende Gasleitung umfassen. Die Gasleitung kann mit Hilfe einer Verbindungseinrichtung, beispielsweise in Form einer Überwurfmutter, an einem Gasanschluss des Gasventils befestigt sein.

Die US 3,168,333 A beschreibt eine Verbindungseinrichtung zum Verbinden eines Schlauchs mit einem Wasserhahn.

Die US 3,394,950 A beschreibt eine Schlauchkupplung zum Verbinden zweier Schläuche. Die EP 1 703 193 A1 beschreibt einen Fittingkörper und ein System bestehend aus einem Fittingkörper und einer Rohrleitungskupplung.

Die US 2011/0101674 A1 beschreibt eine Anordnung mit einem Gasventil, einer Gasleitung und einer Verbindungseinrichtung zum Verbinden der Gasleitung mit einem Gasanschluss des Gasventils.

Die US 5,503,437 A beschreibt eine Schlauchkupplung zum Verbinden zweier Schläuche.

Vor diesem Hintergrund besteht eine Aufgabe der vorliegenden Erfindung darin, ein verbessertes Gaskochfeld zur Verfügung zu stellen.

Demgemäß wird ein Gaskochfeld mit einer Gasleitung, einem Gasventil und einer Verbindungseinrichtung zum Verbinden der Gasleitung mit einem Gasanschluss des Gasventils vorgeschlagen. Die Verbindungseinrichtung umfasst einen Eingriffsabschnitt, der dazu eingerichtet ist, beim axialen Aufschieben der Verbindungseinrichtung auf die Gasleitung einen an der Gasleitung vorgesehenen Gegeneingriffsabschnitt zu hintergreifen, und einen Gewindeeingriffsabschnitt, der zum Verbinden der Gasleitung mit dem Gasventil axial auf ein an dem Gasanschluss vorgesehenes Gewinde aufschiebbar ist.

Durch die Verwendung der Verbindungseinrichtung kann auf eine Überwurfmutter zum Verbinden der Gasleitung mit dem Gasventil verzichtet werden. Dadurch, dass die Verbindungseinrichtung sowohl auf den Gegeneingriffsabschnitt als auch auf das Gewinde des Gasanschlusses aufschiebbar ist, kann die Verbindungseinrichtung sehr schnell und einfach montiert werden. Insbesondere kann die Verbindungseinrichtung werkzeugfrei montiert werden. Hierdurch kann der Montageprozess der Gasleitung an dem Gasventil vereinfacht werden.

Gemäß einer Ausführungsform ist zum Trennen der Gasleitung von dem Gasventil der Gewindeeingriffsabschnitt von dem Gewinde abschraubbar.

Hierdurch kann die Verbindungseinrichtung einfach und beschädigungsfrei von dem Gasventil entfernt werden. Insbesondere kann der Gewindeeingriffsabschnitt auf das Gewinde des Gasanschlusses auch aufschraubbar sein.

Gemäß einer weiteren Ausführungsform ist der Eingriffsabschnitt mit dem Gegeneingriffsabschnitt verschnappbar.

Hierdurch wird eine zuverlässige und dauerhafte Verbindung zwischen dem Eingriffsabschnitt und dem Gegeneingriffsabschnitt gewährleistet.

Gemäß einer weiteren Ausführungsform weist der Eingriffsabschnitt eine Vielzahl federelastisch verformbarer Greifarme auf.

Die Anzahl der Greifarme ist beliebig. Beispielsweise können fünf Greifarme vorgesehen sein.

Gemäß einer weiteren Ausführungsform hintergreifen die Greifarme den Gegeneingriffsabschnitt so, dass die Verbindungseinrichtung relativ zu der Gasleitung drehbar ist.

Hierdurch kann der Gewindeeingriffsabschnitt von dem Gewinde abgeschraubt werden ohne dass die Verbindung zwischen der Gasleitung und dem Eingriffsabschnitt gelöst werden muss.

Gemäß einer weiteren Ausführungsform weisen die Greifarme Einführschrägen zum axialen Einführen des Gegeneingriffsabschnitts in die Verbindungseinrichtung auf.

Hierdurch wird eine besonders einfache Montage der Verbindungseinrichtung verwirklicht.

Gemäß einer weiteren Ausführungsform weisen die Greifarme Rastnasen auf, die dazu eingerichtet sind, hinter dem Gegeneingriffsabschnitt einzurasten.

Hierdurch wird eine ohne Werkzeug nicht zu lösende Verbindung zwischen dem Eingriffsabschnitt und dem Gegeneingriffsabschnitt verwirklicht. Dies erhöht die Betriebszuverlässigkeit der Verbindungseinrichtung.

Gemäß einer weiteren Ausführungsform ist der Gegeneingriffsabschnitt ein die Gasleitung ringförmig umlaufender Flansch.

Alternativ kann der Gegeneingriffsabschnitt eine um die Gasleitung umlaufende Ringnut oder ein an der Gasleitung angebrachter Sicherungsring sein.

Gemäß einer weiteren Ausführungsform weist der Gewindeeingriffsabschnitt eine Vielzahl federelastisch verformbarer Greifarme auf.

Die Anzahl der Greifarme ist beliebig. Beispielsweise weist der Gewindeeingriffsabschnitt fünf Greifarme auf.

Gemäß einer weiteren Ausführungsform weisen die Greifarme ein Innengewinde auf, welches dazu eingerichtet ist, beim axialen Aufschieben des Gewindeeingriffsabschnitts auf das an dem Gasanschluss vorgesehene Gewinde in dieses einzuschnappen.

Das Innengewinde greift vorzugsweise formschlüssig in das Gewinde des Gasanschlusses ein. Der Gewindeeingriffsabschnitt kann auch auf das Gewinde aufschraubbar sein. Vorzugsweise weisen die Greifarme Einführschrägen auf, die das Aufschieben der Verbindungseinrichtung auf das Gewinde vereinfachen.

Gemäß einer weiteren Ausführungsform ist die Verbindungseinrichtung dazu eingerichtet, die Gasleitung axial gegen den Gasanschluss zu pressen.

Hierdurch wird eine fluiddichte Abdichtung zwischen dem Gasanschluss und der Gasleitung erreicht.

Gemäß einer weiteren Ausführungsform ist zwischen der Gasleitung und dem Gasanschluss eine Dichteinrichtung, insbesondere ein O-Ring, vorgesehen.

Die Verwendung eines normgerechten O-Rings ist besonders kostengünstig. Zwischen dem Gegeneingriffsabschnitt der Gasleitung und dem Eingriffsabschnitt der Verbindungseinrichtung kann weiterhin eine Scheibe, beispielsweise eine Unterlegscheibe, vorgesehen sein.

Gemäß einer weiteren Ausführungsform ist die Verbindungseinrichtung materialeinstückig.

Hierdurch kann die Verbindungseinrichtung besonders kostengünstig hergestellt werden. Gemäß einer weiteren Ausführungsform ist die Verbindungseinrichtung aus einem Kunststoffmaterial gefertigt.

Vorzugsweise ist die Verbindungseinrichtung ein Kunststoffspritzgussbauteil. Hierdurch kann die Verbindungseinrichtung kostengünstig in hohen Stückzahlen hergestellt werden. Alternativ kann die Verbindungseinrichtung aus einem Metallwerkstoff gefertigt sein.

Das Gaskochfeld kann Teil eines Haushaltsgeräts sein.

Weitere mögliche Implementierungen des Gaskochfelds umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Verbindungseinrichtung und/oder des Gaskochfelds hinzufügen.

Weitere vorteilhafte Ausgestaltungen und Aspekte des Gaskochfelds sind Gegenstand der Unteransprüche sowie der im Folgenden beschriebenen Ausführungsbeispiele des Gaskochfelds. Im Weiteren wird das Gaskochfeld anhand von bevorzugten Ausführungsformen unter Bezugnahme auf die beigelegten Figuren näher erläutert.
Fig. 1 zeigt eine schematische Seitenansicht einer Ausführungsform eines Gasherds;
Fig. 2 zeigt eine schematische perspektivische Ansicht einer Ausführungsform eines Gasventils für den Gasherd gemäß der Fig. 1;
Fig. 3 zeigt eine schematische perspektivische Ansicht einer Ausführungsform einer Verbindungseinrichtung für das Gasventil gemäß der Fig. 2;
Fig. 4 zeigt eine weitere schematische perspektivische Ansicht der Verbindungseinrichtung gemäß der Fig. 3;
Fig. 5 zeigt eine schematische Schnittansicht der Verbindungseinrichtung gemäß der Fig. 3;
Fig. 6 zeigt eine weitere schematische Schnittansicht der Verbindungseinrichtung gemäß der Fig. 3;
Fig. 7 zeigt eine weitere schematische perspektivische Ansicht des Gasventils gemäß der Fig. 2; und
Fig. 8 zeigt eine weitere schematische perspektivische Ansicht des Gasventils gemäß der Fig. 2.

In den Figuren sind gleiche oder funktionsgleiche Elemente mit denselben Bezugszeichen versehen worden, sofern nichts anderes angegeben ist.

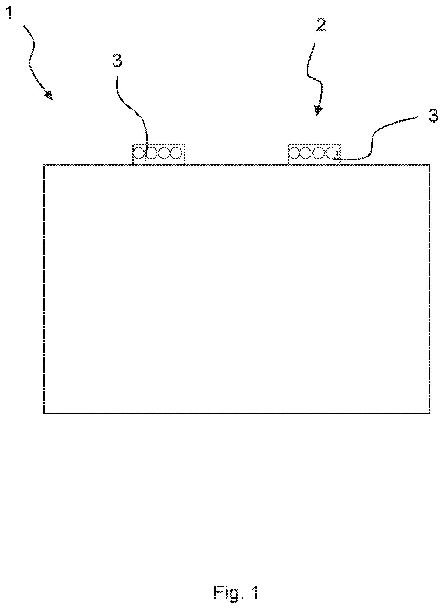

Die Fig. 1 zeigt eine Seitenansicht eines Gasherds 1 mit einem Gaskochfeld 2. Das Gaskochfeld 2 umfasst zumindest einen Gasbrenner 3. Die Anzahl der Gasbrenner 3 ist beliebig.

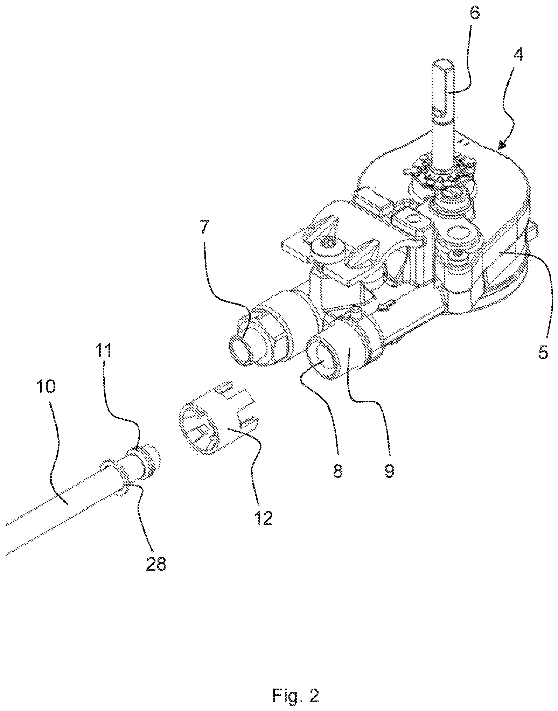

Die Fig. 2 zeigt eine schematische perspektivische Ansicht eines Gasventils 4 des Gaskochfelds 2. Jedem Gasbrenner 3 kann ein Gasventil 4 zugeordnet sein. Das Gasventil 4 weist ein Gehäuse 5 und eine aus dem Gehäuse 5 herausragende Betätigungswelle 6 auf. Das Gasventil 4 kann ein stufenloses Gasregelventil oder ein gestuftes Gasregelventil, ein sogenanntes Step Valve, sein. Das Gehäuse 5 weist einen Anschlussstutzen 7 zum Anschließen eines Thermoelements und einen Gasanschluss 8 auf. An dem Gasanschluss 8 ist ein Gewinde 9, insbesondere ein Außengewinde, vorgesehen.

Das Gaskochfeld 2 weist weiterhin eine Gasleitung 10 auf, die mit dem Gasanschluss 8 verbindbar ist. Die Gasleitung 10 weist einen Gegeneingriffsabschnitt 11 auf. Der Gegeneingriffsabschnitt 11 kann ein um die Gasleitung 10 ringförmig umlaufender Flansch sein. Weiterhin kann der Gegeneingriffsabschnitt 11 eine die Gasleitung 10 umlaufende Nut sein. In der Fig. 2 ist weiterhin eine Verbindungseinrichtung 12 zum Verbinden der Gasleitung 10 mit dem Gasanschluss 8 des Gasventils 4 vorgesehen.

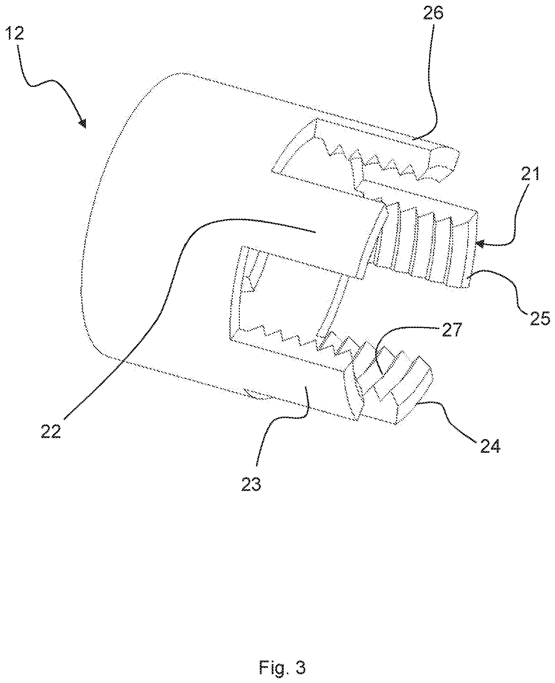

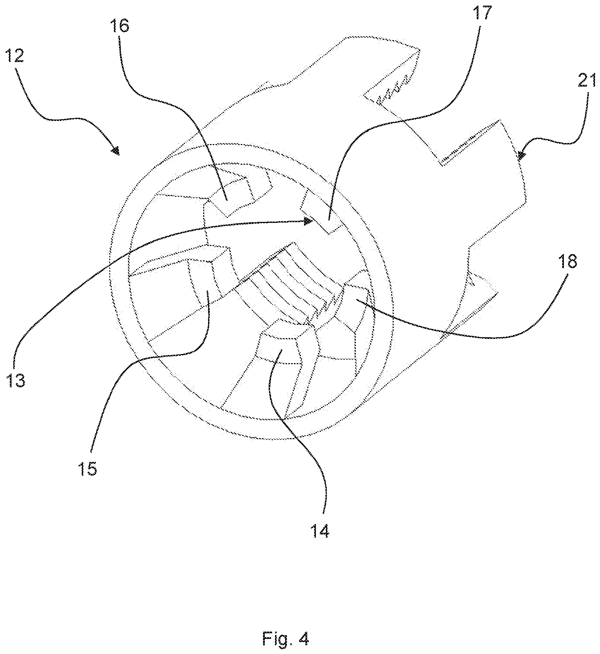

Die Fig. 3 zeigt in einer schematischen perspektivischen Ansicht eine Ausführungsform der Verbindungseinrichtung 12. Die Fig. 4 zeigt die Verbindungseinrichtung 12 in einer weiteren schematischen perspektivischen Ansicht. Im Folgenden wird auf die Fig. 3 und 4 gleichzeitig Bezug genommen.

Die Verbindungseinrichtung 12 umfasst einen Eingriffsabschnitt 13, der dazu eingerichtet ist, beim axialen Aufschieben der Verbindungseinrichtung 12 auf die Gasleitung 10 den an der Gasleitung 10 vorgesehenen Gegeneingriffsabschnitt 11 zu hintergreifen. Der Eingriffsabschnitt 13 weist vorzugsweise eine Vielzahl federelastisch verformbarer Greifarme 14 bis 18 auf. Die Greifarme 14 bis 18 sind dazu eingerichtet, den Gegeneingriffsabschnitt 11 der Gasleitung 10 so zu hintergreifen, dass die Verbindungseinrichtung 12 relativ zu der Gasleitung 10 drehbar ist.

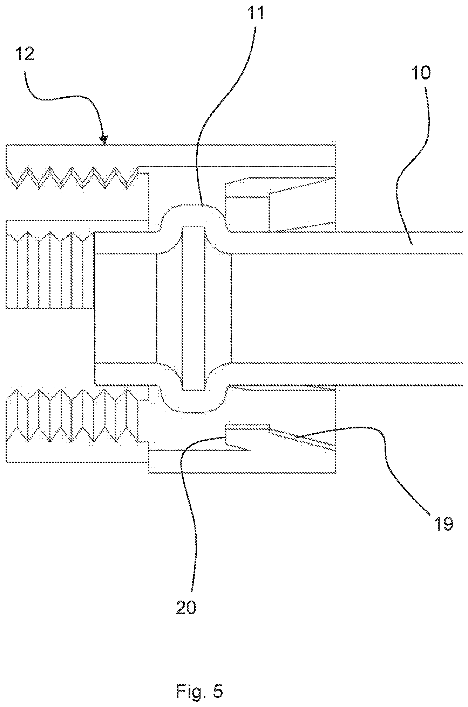

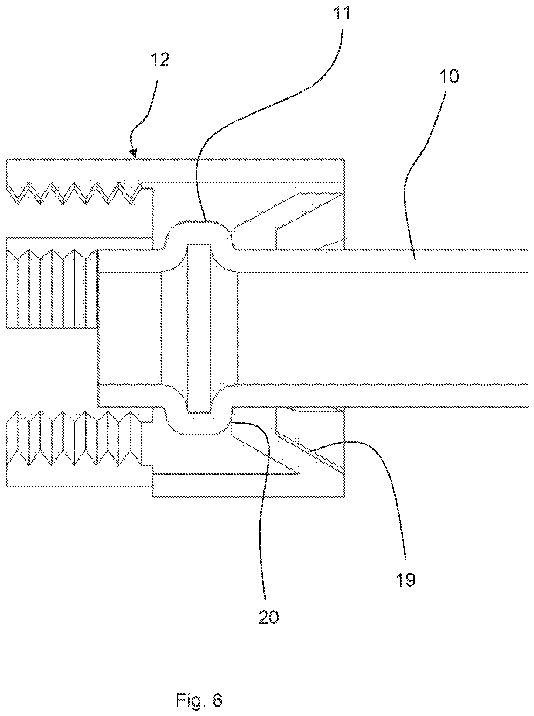

Die Fig. 5 und 6 zeigen das Aufschieben der Verbindungseinrichtung 12 auf die Gasleitung 10. Die Greifarme 14 bis 18 weisen Einführschrägen 19 zum axialen Einführen des Gegeneingriffsabschnitts 11 in die Verbindungseinrichtung 12 auf. Die Greifarme 14 bis 18 umfassen weiterhin Rastnasen 20, die dazu eingerichtet sind, hinter dem Gegeneingriffsabschnitt 11 einzurasten.

Die Verbindungseinrichtung 12 umfasst, wie in der Fig. 3 gezeigt, weiterhin einen Gewindeeingriffsabschnitt 21, der zum Verbinden der Gasleitung 10 mit dem Gasventil 4 axial auf das an dem Gasanschluss 8 vorgesehene Gewinde 9 aufschiebbar ist. Zum Trennen der Gasleitung 10 von dem Gasventil 4 ist der Gewindeeingriffsabschnitt 21 von dem Gewinde 9 des Gasanschlusses 8 abschraubbar. Der Gewindeeingriffsabschnitt 21 weist vorzugsweise eine Vielzahl federelastisch verformbarer Greifarme 22 bis 26 auf. Die Anzahl der Greifarme 22 bis 26 ist beliebig. Die Greifarme 22 bis 26 weisen ein Innengewinde 27 auf, welches dazu eingerichtet ist, beim axialen Aufschieben des Gewindeeingriffsabschnitts 21 in das an dem Gasanschluss 8 vorgesehene Gewinde 9 formschlüssig einzuschnappen.

Insbesondere ist die Verbindungseinrichtung 12 dazu eingerichtet, die Gasleitung 10 axial gegen den Gasanschluss 8 zu pressen. Zwischen der Gasleitung 10 und dem Gasanschluss 8 kann eine Dichteinrichtung, insbesondere ein O-Ring, vorgesehen sein. Eine Scheibe 28 (Fig. 2) kann zwischen dem Eingriffsabschnitt 13 der Verbindungseinrichtung 12 und dem Gegeneingriffsabschnitt 11 der Gasleitung 10 vorgesehen sein. Hierdurch kann eine von den Greifarmen 14 bis 18 auf den Gegeneingriffsabschnitt 11 aufgebrachte Kraft gleichmäßig verteilt werden.

Die Verbindungseinrichtung 12 ist vorzugsweise materialeinstückig. Insbesondere ist die Verbindungseinrichtung 12 aus einem Kunststoffmaterial gefertigt. Beispielsweise kann die Verbindungseinrichtung 12 ein Kunststoffspritzgussbauteil sein.

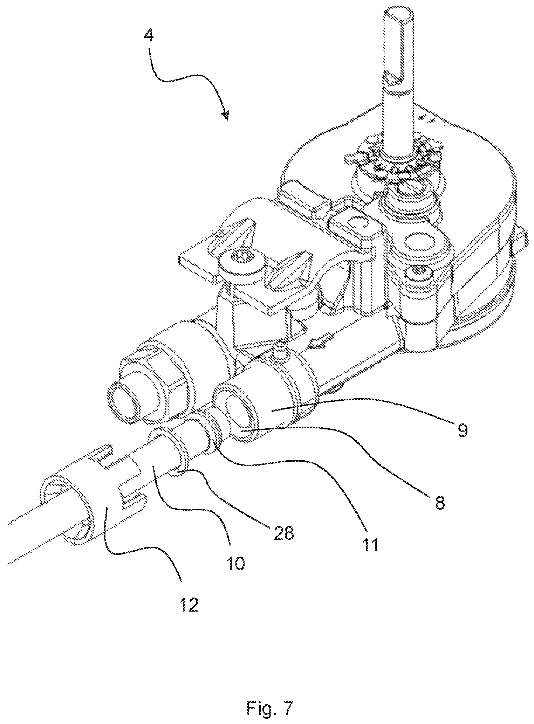

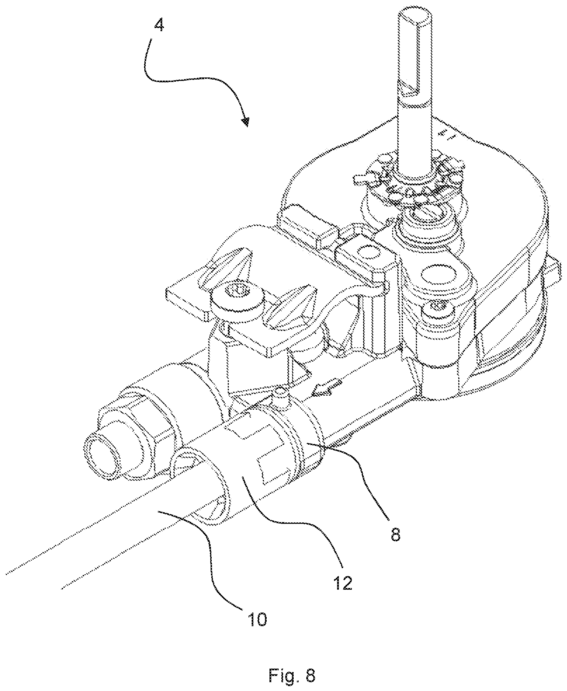

Die Fig. 7 und 8 zeigen die Montage der Verbindungseinrichtung 12 an dem Gasventil 4. Wie die Fig. 7 zeigt, wird zunächst die Verbindungseinrichtung 12 auf die Gasleitung 10 aufgeschoben. Dabei schnappt der Eingriffsabschnitt 13 der Verbindungseinrichtung 12 über den Gegeneingriffsabschnitt 11 der Gasleitung 10 über. Hierdurch ist die Verbindungseinrichtung 12 so an der Gasleitung 10 festgelegt, dass diese nicht über den Gegeneingriffsabschnitt 11 herüberrutschen und von der Gasleitung 10 abgezogen werden kann. Die Gasleitung 10 wird gegen den Gasanschluss 8 gedrückt und die Verbindungseinrichtung 12 wird axial auf das an dem Gasanschluss 8 vorgesehene Gewinde 9 aufgeschoben. Dabei schnappt das Innengewinde 27 des Gewindeeingriffsabschnitts 21 formschlüssig in das Gewinde 9 des Gasanschlusses 8 ein.

Die Fig. 8 zeigt die an dem Gasventil 4 fertig montierte Gasleitung 10. Zum Lösen der Verbindungseinrichtung 12 von dem Gasanschluss 8 kann der Gewindeeingriffsabschnitt 21 von dem Gewinde 9 des Gasanschlusses 8 heruntergeschraubt werden.

Mit Hilfe der Verbindungseinrichtung 12 kann auf zusätzliche Verbindungselemente, wie beispielsweise auf eine Überwurfmutter, zum Befestigen der Gasleitung 10 an dem Gasventil 4 verzichtet werden. Weiterhin ist die Verbindungseinrichtung 12 werkzeugfrei montierbar.

### Verwendete Bezugszeichen:

- 1: Gasherd
- 2: Gaskochfeld
- 3: Gasbrenner
- 4: Gasventil
- 5: Gehäuse
- 6: Betätigungswelle
- 7: Anschlussstutzen
- 8: Gasanschluss
- 9: Gewinde
- 10: Gasleitung
- 11: Gegeneingriffsabschnitt
- 12: Verbindungseinrichtung
- 13: Eingriffsabschnitt
- 14: Greifarm
- 15: Greifarm
- 16: Greifarm
- 17: Greifarm
- 18: Greifarm
- 19: Einführschräge
- 20: Rastnase
- 21: Gewindeeingriffsabschnitt
- 22: Greifarm
- 23: Greifarm
- 24: Greifarm
- 25: Greifarm
- 26: Greifarm
- 27: Innengewinde
- 28: Scheibe

## Patentansprüche

1. Gaskochfeld (2) mit einer Gasleitung (10), einem Gasventil (4) und einer Verbindungseinrichtung (12) zum Verbinden der Gasleitung (10) mit einem Gasanschluss (8) des Gasventils (4), wobei die Verbindungseinrichtung (12) einen Eingriffsabschnitt (13), der dazu eingerichtet ist, beim axialen Aufschieben der Verbindungseinrichtung (12) auf die Gasleitung (10) einen an der Gasleitung (10) vorgesehenen Gegeneingriffsabschnitt (11) zu hintergreifen, und einen Gewindeeingriffsabschnitt (21) umfasst, der zum Verbinden der Gasleitung (10) mit dem Gasventil (4) axial auf ein an dem Gasanschluss (8) vorgesehenes Gewinde (9) aufschiebbar ist.

2. Gaskochfeld nach Anspruch 1, **dadurch gekennzeichnet, dass** zum Trennen der Gasleitung (10) von dem Gasventil (4) der Gewindeeingriffsabschnitt (21) von dem Gewinde (9) abschraubbar ist.

3. Gaskochfeld nach Anspruch 1 oder 2, **dadurch gekennzeichnet, dass** der Eingriffsabschnitt (13) mit dem Gegeneingriffsabschnitt (11) verschnappbar ist.

4. Gaskochfeld nach einem der Ansprüche 1 - 3, **dadurch gekennzeichnet, dass** der Eingriffsabschnitt (13) eine Vielzahl federelastisch verformbarer Greifarme (14 - 18) aufweist.

5. Gaskochfeld nach Anspruch 4, **dadurch gekennzeichnet, dass** die Greifarme (14 - 18) den Gegeneingriffsabschnitt (11) so hintergreifen, dass die Verbindungseinrichtung (12) relativ zu der Gasleitung (10) drehbar ist.

6. Gaskochfeld nach Anspruch 4 oder 5, **dadurch gekennzeichnet, dass** die Greifarme (14 - 18) Einführschrägen (19) zum axialen Einführen des Gegeneingriffsabschnitts (11) in die Verbindungseinrichtung (12) aufweisen.

7. Gaskochfeld nach einem der Ansprüche 4 - 6, **dadurch gekennzeichnet, dass** die Greifarme (14 - 18) Rastnasen (20) aufweisen, die dazu eingerichtet sind, hinter dem Gegeneingriffsabschnitt (11) einzurasten.

8. Gaskochfeld nach einem der Ansprüche 1 - 7, **dadurch gekennzeichnet, dass** der Gegeneingriffsabschnitt (11) ein um die Gasleitung (10) ringförmig umlaufender Flansch ist.

9. Gaskochfeld nach einem der Ansprüche 1 - 8, **dadurch gekennzeichnet, dass** der Gewindeeingriffsabschnitt (21) eine Vielzahl federelastisch verformbarer Greifarme (22 - 26) aufweist.

10. Gaskochfeld nach Anspruch 9, **dadurch gekennzeichnet, dass** die Greifarme (22 - 26) ein Innengewinde (27) aufweisen, welches dazu eingerichtet ist, beim axialen Aufschieben des Gewindeeingriffsabschnitts (21) auf das an dem Gasanschluss (8) vorgesehene Gewinde (9) in dieses einzuschnappen.

11. Gaskochfeld nach einem der Ansprüche 1 - 10, **dadurch gekennzeichnet, dass** die Verbindungseinrichtung (12) dazu eingerichtet ist, die Gasleitung (10) axial gegen den Gasanschluss (8) zu pressen.

12. Gaskochfeld nach einem der Ansprüche 1 - 11, **dadurch gekennzeichnet, dass** zwischen der Gasleitung (10) und dem Gasanschluss (8) eine Dichteinrichtung, insbesondere ein O-Ring, vorgesehen ist.

13. Gaskochfeld nach einem der Ansprüche 1 - 12, **dadurch gekennzeichnet, dass** die Verbindungseinrichtung (12) materialeinstückig ist.

14. Gaskochfeld nach einem der Ansprüche 1 - 13, **dadurch gekennzeichnet, dass** die Verbindungseinrichtung (12) aus einem Kunststoffmaterial gefertigt ist.

## Claims

1. Gas hob (2) having a gas line (10), a gas valve (4) and a connection device (12) for connecting the gas line (10) to a gas connection (8) of the gas valve (4), wherein the connection device (12) comprises an engagement section (13) which is designed to engage behind a counter-engagement section (11) provided on the gas line (10) when the connection device (12) is axially pushed onto the gas line (10), and a threaded engagement section (21) which can be axially pushed onto a thread (9) provided on the gas connection (8) to connect the gas line (10) to the gas valve (4).

2. Gas hob according to claim 1, **characterised in that** the threaded engagement section (21) can be unscrewed from the thread (9) to separate the gas line (10) from the gas valve (4).

3. Gas hob according to claim 1 or 2, **characterised in that** the engagement section (13) can be snapped onto the counter-engagement section (11).

4. Gas hob according to one of claims 1-3, **characterised in that** the engagement section (13) has a plurality of resiliently deformable gripping arms (14-18).

5. Gas hob according to claim 4, **characterised in that** the gripping arms (14-18) engage behind the counter-engagement section (11) such that the connection device (12) can be rotated relative to the gas line (10).

6. Gas hob according to claim 4 or 5, **characterised in that** the gripping arms (14-18) have insertion bevels (19) for axially inserting the counter-engagement section (11) into the connection device (12).

7. Gas hob according to one of claims 4-6, **characterised in that** the gripping arms (14-18) have latching lugs (20) which are designed to latch behind the counter-engagement section (11).

8. Gas hob according to one of claims 1-7, **characterised in that** the counter-engagement section (11) is a flange which annularly surrounds the gas line (10).

9. Gas hob according to one of claims 1-8, **characterised in that** the threaded engagement section (21) has a plurality of resiliently deformable gripping arms (22-26).

10. Gas hob according to claim 9, **characterised in that** the gripping arms (22-26) have an internal thread (27) which is designed, when the threaded engagement section (21) is axially pushed onto the thread (9) provided on the gas connection (8), to snap into said thread (9).

11. Gas hob according to one of claims 1-10, **characterised in that** the connection device (12) is designed to press the gas line (10) axially against the gas connection (8).

12. Gas hob according to one of claims 1-11, **characterised in that** a sealing device, in particular an O-ring, is provided between the gas line (10) and the gas connection (8).

13. Gas hob according to one of claims 1-12, **characterised in that** the connection device (12) is made of one piece of material.

14. Gas hob according to one of claims 1-13, **characterised in that** the connection device (12) is made of a plastic material.

## Revendications

1. Table de cuisson à gaz (2) comprenant une conduite de gaz (10), une vanne de gaz (4) et un dispositif de raccordement (12) pour le raccord de la conduite de gaz (10) à un branchement de gaz (8) de la vanne de gaz (4), dans laquelle le dispositif de raccordement (12) comprend une section de prise (13) prévue pour accrocher, en cas de coulissement axial du dispositif de raccordement (12) sur la conduite de gaz (10) une section de contre-prise prévue sur la conduite de gaz (10) et une section de prise filetée, qui peut coulisser pour raccorder la conduite de gaz (10) à la vanne de gaz (4) axialement sur un filet (9) prévu sur le branchement de gaz (8).

2. Table de cuisson à gaz selon la revendication 1, **caractérisée en ce que** pour séparer la conduite de gaz (10) de la vanne de gaz (4) la section de prise filetée (21) peut être dévissée du filet (9).

3. Table de cuisson à gaz selon la revendication 1 ou 2, **caractérisée en ce que** la section de prise (13) se clipse dans la section de contre-prise (11).

4. Table de cuisson à gaz selon l'une des revendications 1-3, **caractérisée en ce que** la section de prise (13) comprend une pluralité de bras de prise (14-18) déformables par une élasticité de ressort.

5. Table de cuisson à gaz selon la revendication 4, **caractérisée en ce que** les bras de prise (14-18) accrochent la section de contre-prise (11) de façon que le dispositif de raccordement (12) peut pivoter par rapport à la conduite de gaz (10).

6. Table de cuisson à gaz selon la revendication 4 ou 5, **caractérisée en ce que** les bras de prise (14-18) comprennent des obliques d'insertion (19) pour l'insertion axiale de la section de contre-prise (11) dans le dispositif de raccordement (12).

7. Table de cuisson à gaz selon l'une des revendications 4-6, **caractérisée en ce que** les bras de prise (14-18) comprennent des taquets d'encliquetage (20) prévus pour s'encliqueter derrière la section de contre-prise (11).

8. Table de cuisson à gaz selon l'une des revendications 1-7, **caractérisée en ce que** la section de contre-prise (11) est une aile entourant annulairement la conduite de gaz (10).

9. Table de cuisson à gaz selon l'une des revendications 1-8, **caractérisée en ce que** la section de prise filetée (21) comprend une pluralité de bras de prise (22-26) déformables par une élasticité de ressort.

10. Table de cuisson à gaz selon la revendication 9, **caractérisée en ce que** les bras de prise (22-26) présentent un filet intérieur (27) prévu pour se clipser dans celui-ci en cas de coulissement axial de la section de prise filetée (21) sur le filet (9) prévu sur le branchement de gaz (8).

11. Table de cuisson à gaz selon l'une des revendications 1-10, **caractérisée en ce que** le dispositif de raccordement (12) est prévu pour comprimer la conduite de gaz (10) axialement contre le branchement de gaz (8).

12. Table de cuisson à gaz selon l'une des revendications 1-11, **caractérisée en ce qu'**entre la conduite de gaz (10) et le branchement de gaz (8) est prévu un dispositif d'étanchéité, en particulier un joint torique.

13. Table de cuisson à gaz selon l'une des revendications 1-12, **caractérisée en ce que** le dispositif de raccordement (12) est constitué d'un seul matériau.

14. Table de cuisson à gaz selon l'une des revendications 1-13, **caractérisée en ce que** le dispositif de raccordement (12) est constitué d'une matière synthétique.
